# EUROPEAN PATENT SPECIFICATION

(11) **EP 3 065 525 B1**
(45) Date of publication and mention of the grant of the patent: **18.12.2019**
(21) Application number: 14808807.3
(22) Date of filing: 04.11.2014
(51) Int. Cl.: A01B 61/04

(54) **SWIVEL MOUNTED DEVICE ON THE WORKING TOOL OF AN AGRICULTURAL MACHINE**
SCHWENKBAR MONTIERTE VORRICHTUNG AUF DEM ARBEITSWERKZEUG EINER LANDWIRTSCHAFTLICHEN MASCHINE
DISPOSITIF PIVOTANT SUR L'OUTIL DE TRAVAIL D'UNE MACHINE AGRICOLE

(30) Priority: 09.11.2013 CZ 20130869
(43) Date of publication of application: 14.09.2016
(73) Proprietor: Farmet A.S., 55203 Ceská Skalice (CZ)
(72) Inventor: SMOLA,Tomas, 52204 Chvalkovice (CZ)
(74) Representative: Skoda, Milan
(86) International application number: PCT/CZ2014/000127
(87) International publication number: WO 2015/067227

(56) References cited:
- EP-A1- 2 625 944
- AU-B2- 541 415
- FR-A1- 2 688 562

## Description

### Technical Field

The invention relates to a swivel mounted device on an agricultural machine. Specifically to a swivel mounted device on an agricultural machine for tillage, fertiliser application, or sowing and its protection from overloading when the device comes into contact with an obstacle.

### State of the Art

Currently any number of devices for holding the working tools of agricultural machinery to the frame and their protection when the tool is overloaded are known.

Known are holders of working tools of agricultural machinery made of flexible rubber elements which utilise the elastic properties of these elements. The working tool is held to the frame of the machine by means of these rubber elements. In the holding mode, these elements are taut. When the machine is overloaded, the machine shifts, the elements stretch, and further power is needed for subsequent shifts. This construction design is known, for example, from patent documents EP 2404489A1, EP 2548428, EP 1541003, DE 102009058342, EP 1880590, EP 2548427, DE 202004007112, EP 2210460, DE 10204160, EP 2548426 and ES 2381692, whereas among its disadvantages is that it is not possible to precisely guide the working tool, as the tool constantly oscillates depending on the size of the strain, and further, it is not possible to determine the value of forces acting on the working tool which result in its unlocking , and also leads to constantly changing working angles of the tool during field work.

Also, holders for the working tools of agricultural machines by means of coiled springs are known. Here, the working tool is connected to the supporting frame by a rotary bearing, a spring, and a stopper which define the the basic position of the tool. In the basic state, the spring is coiled. Thanks to this, the tool is firmly guided whereby when the specified release force is exceeded, deflection occurs. This design build, for example, is known from patent documents CA 2199335 and EP 1125488, wherein among its disadvantages is that its construction is complicated and expensive, and also that the rotary bearing is usually designed to use a pin joint, which very often leads to significant distortion.

From current technology, we also know holders for the working tools of agricultural machines by means of using a hydraulic cylinder. This design is based on a similar principle to the afore mentioned coil spring holders, while in place of the spring, a hydraulic cylinder and pressure accumulator is used. This variant is used particularly for extreme heavy loading tools. This design is, for example, known from the patent documents US 7823651, DE 19810682, FR 2832203 and US 4505337. This design has substantially the same disadvantages as the previous coil spring system.

From patent document CZ 303 936 we also know flexible rotating mounting arms for agricultural tillage machines which consist of brackets fixed to the base frame, an arm including tines which is provided with a freely rotatable disc or ploughshare and a spring. The arm is spring-rotatable and fixed to the bracket using at least two buffer blocks so that as the arm is pressed from one side to the first block with axial kickback to the first wear-resistant washer, the other side is pressed to the second block with axial kickback to the second wear-resistant washer. The first and second buffer blocks are braced in the axial position by a spacer sleeve and are held by a nut and bolt. The disadvantage of this design construction is that to a certain limit, there is somewhat very unstable force to the mounting blocks that does not allow for accurate fixed guidance of the working tool, the tool is continuously in motion while at work, thereby also leading to constant changes to the working angle of the tool.

From the above noted state- of -the-art, many disadvantages of current technology are evident, and it appears as the most significant disadvantage that the majority of the known solutions do not provide inexpensive and yet vertically stable guidance of the working tool in the soil.

The aim of the invention is the design of a swivel mounted device on an agricultural machine which will be structurally simple and inexpensive to produce, and mainly that will enable accurate and stable guidance of the working tool.

### Principle of the Invention

The mentioned deficiencies are to a large part removed and the objectives of the invention fulfilled by a swivel mounted device on an agricultural machine, specifically to a swivel mounted device on an agricultural machine for tillage, fertiliser application, or sowing and its protection from overloading when the device comes into contact with an obstacle, mounted at the connection of the support frame of the agricultural machine and the arm of the working tool which is, according to the invention, characterised in that it comprises at least one flexible tubular segment, which is, by vulcanisation, mounted whole of its inside surface directly to a surface of a shaft and simultaneously is moulded to a housing, and in that the shaft is simultaneously fixed to the support frame and the housing is fixed to the arm of the working tool, and the flexible tubular segment is made of rubber.

In the context of the present invention, the expression "moulded to a housing" is to be understood as "compressed or pressed in the housing".

The advantage of this structural design is that it is simple, inexpensive to produce, and provides for substantially more stable holding of the working tool than in previously known design solutions.

In terms of function and cost, it is to advantage if the flexible tubular segment is made of rubber.

In advantageous arrangement, the swivel mounting of the working tool of an agricultural machine has at least two flexible tubular segments. Such a configuration is highly stable.

It is also to advantage if the shaft is mounted by a pair of brackets to the supporting frame of the agricultural machine.

It is also to great advantage if the shaft is mounted to the support frame by a locking connection, which is most advantageous and inexpensive to manufacture if the connection is square.

From the viewpoint of overall functionality of a swivel mounting of a working tool of an agricultural machine, it is to advantage if the swivel mounting further comprises a locking means mounted in the space between the frame and the arm of the working tool. Such a design is particularly advantageous when applied to agricultural machines being used in difficult working conditions.

The locking means is to advantage a coiled spring, and by variation, a hydraulic or pneumatic damping cylinder.

In advantageous arrangement, the locking means is simultaneously pivotally mounted to a holder on the support frame and to a bracket mounted on the arm of the working tool. This design is fully operational, while simple in its design and manufacture.

The swivel mounting of a working tool of an agricultural machine, according to the invention, ensures broad stability of the working tool, which allows for consistency of the working angles of the tool at work to be maintained. From the viewpoint of optimal functionality of the working tool, it is to advantage if, according to the invention, the design construction enables firm and precise guidance of the working tool. It is to great advantage if the design construction allows for very exact setting of the safety release forces.

### Overview of the Figures

The invention will be more closely elucidated using drawings, in which Fig. 1 shows a detailed view with a partial cross-section of the mounting of the flexible tubular segment in the space between the shaft and the housing. Fig. 2 shows a detailed view of the mounting of the flexible tubular segment to the shaft. Fig. 3 shows an overall view of the swivel mounting of the working tool of an agricultural machine partially cut so that it does not show the locking means and, Fig. 4 shows a general view with a partial sectional view of the swivel mounting of a working tool of an agricultural machine with the locking means.

### Examples of the Performance of the Invention

### Example 1

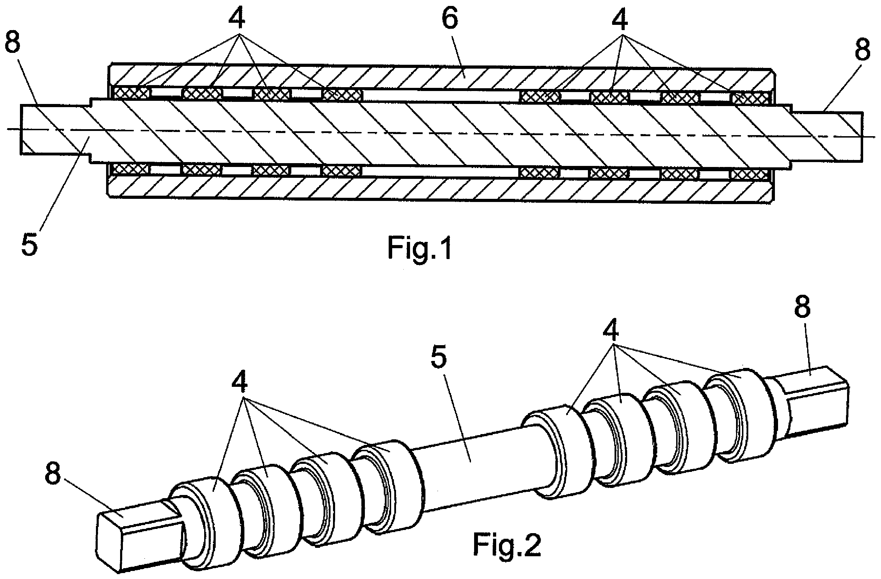

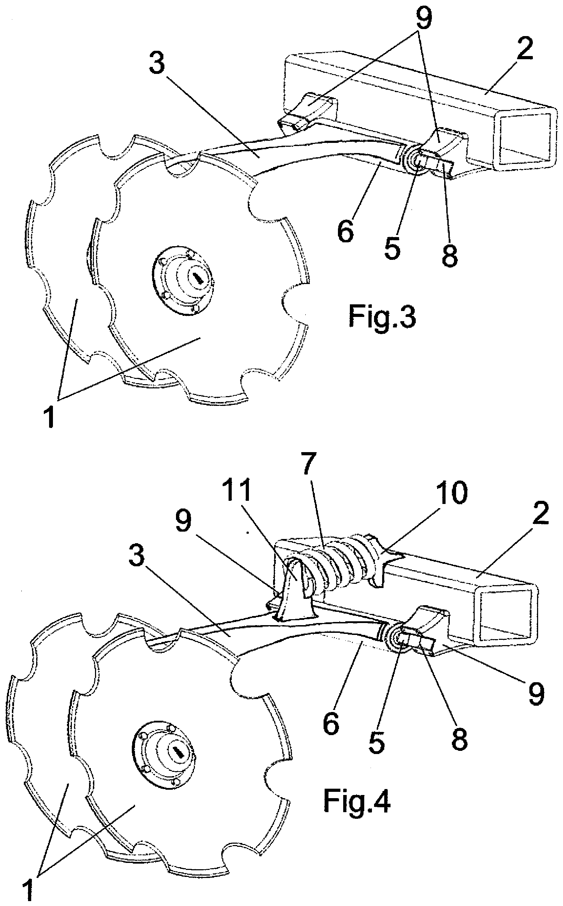

The swivel mounting (Fig. 1, Fig. 2, Fig. 3) of the working tool 1 of an agricultural machine for tillage, fertiliser application and sowing, for its protection from overloading when the device comes into contact with an obstacle, is arranged mounted at the connection of the supporting frame 2 of the agricultural machine and the arm 3 of the working tool 1 which is a working disk.

The swivel mounting of the working tool 1 of an agricultural machine containing eight flexible rubber tubular segments 4 which are fastened by vulcanisation whole of its inside surface directly to the surface of the shaft 5 and are simultaneously compressed to the housing 6, while the shaft 5 is also simultaneously mounted to the supporting frame 2 and the housing 6 is connected to the arm 3 of the working tool 1.

The shaft 5 is mounted by a pair of brackets 9 to the supporting frame 2 and is secured therein by a locking connection 8, which is square.

### Example 2

The swivel mounting (Fig. 1, Fig. 2, Fig. 4) of the working tool 1 of an agricultural machine for tillage, fertiliser application and sowing, for its protection from overloading when the device comes into contact with an obstacle, is arranged mounted at the connection of the supporting frame 2 of the agricultural machine and the arm 3 of the working tool 1 which is a working disk.

The swivel mounting of the working tool 1 of an agricultural machine containing eight flexible rubber tubular segments 4 which are fastened by vulcanisation whole of its inside surface directly to the surface of the shaft 5 and are simultaneously moulded to the housing 6, while the shaft 5 is also simultaneously mounted to the supporting frame 2 and the housing 6 is connected to the arm 3 of the working tool 1.

The shaft 5 is mounted by a pair of brackets 9 to the supporting frame 2 and is secured therein by a locking connection 8, which is square.

The swivel mounting of the working tool of an agricultural machine further comprises a locking means 7 mounted in the space between the supporting frame 2 and the arm 3 of the working tool 1.

The locking means 7 is a coiled spring, while, alternatively it may be a hydraulic or pneumatic cylinder.

The locking means 7 is also pivotally mounted in a holder 10 mounted on the supporting frame 2 and to the holder 11 mounted on the arm 3 of the working tool 1.

### Industrial Application

The swivel mounted device on an agricultural machine, according to the invention which can be used for securing the working tools of agricultural machines, specifically for securing the working tools of agricultural machines and protecting them from overloading when the device comes into contact with an obstacle.

### List of Reference Marks

- 1: working tool
- 2: supporting frame
- 3: arm
- 4: flexible tubular segment
- 5: shaft
- 6: housing
- 7: locking means
- 8: locking connection
- 9: holder I
- 10: holder II
- 11: holder III

## Claims

1. A swivel mounted device on the working tool of an agricultural machine, specifically to a swivel mounted device on the working tool (1) of an agricultural machine for tillage, fertiliser application, or sowing and its protection from overloading when the device comes into contact with an obstacle, mounted at the connection of the supporting frame (2) of the agricultural machine and the arm (3) of the working tool (1) **CHARACTERISED in that** it comprises at least one flexible tubular segment (4), which is, by vulcanisation, mounted whole of its inside surface directly to surface of a shaft (5) and simultaneously is moulded to a housing (6), and **in that** the shaft (5) is simultaneously fixed to the support frame (2) and the housing (6) is fixed to the arm (3) of the working tool (1), and the flexible tubular segment (4) is made of rubber.

2. The swivel mounted device on the working tool of an agricultural machine, according to claim 1, **CHARACTERISED in that** it comprises at least two flexible tubular segments (4).

3. The swivel mounted device on the working tool of an agricultural machine, according to any of the preceding claims, **CHARACTERISED in that** the shaft (5) is mounted by a pair of brackets (9) to the supporting frame (2).

4. The swivel mounted device on the working tool of an agricultural machine, according to any of the preceding claims, **CHARACTERISED in that** the shaft (5) is mounted to the supporting frame 2 and is secured therein by a locking connection (8).

5. The swivel mounted device on the working tool of an agricultural machine, according to any of the preceding claims, **CHARACTERISED in that** it further comprises a locking means (7) mounted in the space between the supporting frame (2) and the arm (3) of the working tool (1).

6. The swivel mounted device on the working tool of an agricultural machine, according to claim 5, **CHARACTERISED in that** the locking means (7) is a coiled spring.

7. The swivel mounted device on the working tool of an agricultural machine, according to claim 5, **CHARACTERISED in that** the locking means (7) is a hydraulic cylinder.

8. The swivel mounted device on the working tool of an agricultural machine, according to claim 5, **CHARACTERISED in that** the locking means (7) is a pneumatic cylinder.

9. The swivel mounted device on the working tool of an agricultural machine, according to any of the claims 5 to 8, **CHARACTERISED in that** the locking means (7) is simultaneously pivotally mounted in a holder (10) mounted on the supporting frame (2) and to the holder (11) mounted on the arm (3) of the working tool (1).

## Patentansprüche

1. Die Schwenklagerung des Arbeitsgeräts der Landmaschine, insbesondere die Schwenklagerung des Arbeitsgeräts (1) der Landmaschine für die Ackerbearbeitung, Düngemittelanwendung oder die Aussaat, wegen ihrer Sicherung gegen die Überlastung beim Auffahren eines Hindernisses, welche in Verbindung des Halterahmens (2) der Landmaschine und des Rumpfes (3) des Arbeitsgeräts (1) angeordnet wird, **ist dadurch gekennzeichnet, dass** sie mindestens ein flexibles zylindrisches Segment (4) enthält, welches durch die Vulkanisierung an die Wellenoberfläche (5) direkt befestigt und zugleich im Gehäuse (6) eingepresst wird, wobei die Welle (5) gleichzeitig im Halterahmen (2) befestigt und das Gehäuse (6) mit dem Rumpf (3) des Arbeitsgeräts (1) verbunden wird, wobei das flexible zylindrische Segment (4) in Gummi ausgeführt wird.

2. Die Schwenklagerung des Arbeitsgeräts der Landmaschine nach Forderung 1, **ist dadurch gekennzeichnet, dass** sie mindestens zwei flexible zylindrische Segmente (4) enthält.

3. Die Schwenklagerung des Arbeitsgeräts der Landmaschine nach einer der vorherigen Forderungen, **ist dadurch gekennzeichnet, dass** die Welle (5) zwischen dem Halterpaar (9) des Halterahmens (2) befestigt ist.

4. Die Schwenklagerung des Arbeitsgeräts der Landmaschine nach einer der vorherigen Forderungen, **ist dadurch gekennzeichnet, dass** die Welle (5) am Halterahmen (2) mittels einer geformten Verbindung (8) befestigt ist.

5. Die Schwenklagerung des Arbeitsgeräts der Landmaschine nach einer der vorherigen Forderungen, **ist dadurch gekennzeichnet, dass** sie weiter noch ein Sicherungsmittel (7), welches im Raum zwischen dem Halterahmen (2) und dem Rumpf (3) des Arbeitsgeräts (1) angeordnet ist, enthält.

6. Die Schwenklagerung des Arbeitsgeräts der Landmaschine nach der Forderung 5, **ist dadurch gekennzeichnet, dass** das Sicherungsmittel (7) eine Wickelfeder ist.

7. Die Schwenklagerung des Arbeitsgeräts der Landmaschine nach der Forderung 5, **ist dadurch gekennzeichnet, dass** das Sicherungsmittel (7) ein Hydraulikzylinder ist.

8. Die Schwenklagerung des Arbeitsgeräts der Landmaschine nach Forderung 5, **ist dadurch gekennzeichnet, dass** das Sicherungsmittel (7) ein Luftzylinder ist.

9. Die Schwenklagerung des Arbeitsgeräts der Landmaschine nach einer der Forderungen 5 bis 8, **ist dadurch gekennzeichnet, dass** das Sicherungsmittel (7) gleichzeitig in dem Halter (10), angeordnet am Halterahmen (2), sowie in dem Halter (11), angeordnet am Rumpf (3) des Arbeitsgeräts (1), schwenkbar gelagert wird.

## Revendications

1. La mise basculante de l'outille de travail de la machine agricole, notamment la mise basculante de l'outille de travail (1) de la machine agricole pour le travail de la terre, pour la distribution des engrais ou pour les semailles, à son assurance contre son surcharge lors de la rencontre d'obstacles, disposée dans la jonction du cadre portatif (2) de la machine agricole et de l'étançon (3) de l'outille de travail (1), **caractérisé par le fait qu'**elle contient un segment (4) cylindrique souple qui est fixé par vulcanisation directement sur la surface de l'arbre (5), et simultanément, elle est emboutie dans une douille (6) et en même temps, l'arbre (5) est fixé au cadre portatif (2) et la douille (6) est jointe à l'étançon (3) de l'outille de travaille (1) et en même temps, le segment (4) cylindrique souple est fait du caoutchouc.

2. La mise basculante de l'outille de travail de la machine agricole selon la revendication 1, **caractérisé par le fait qu'**elle contient au moins deux segments (4) cylindriques souples.

3. La mise basculante de l'outille de travail de la machine agricole selon une des revendications précédentes, **caractérisé par le fait que** l'arbre (5) est fixé dans le couple des griffes (9) du cadre portatif (2).

4. La mise basculante de l'outille de travail de la machine agricole selon une des revendications précédentes, **caractérisé par le fait que** l'arbre (5) est fixé dans le cadre portatif (2) moyennement un assemblage à profil (8).

5. La mise basculante de l'outille de travail de la machine agricole selon une des revendications précédentes, **caractérisé par le fait que**, puis, elle contient un moyen de sécurité (7) disposé dans l'espace entre le cadre portatif (2) et l'étançon (3) de l'outille de travail (1).

6. La mise basculante de l'outille de travail de la machine agricole selon la revendication 5, **caractérisé par le fait que** le moyen de sécurité (7) est le ressort enroulé.

7. La mise basculante de l'outille de travail de la machine agricole selon la revendication 5, **caractérisé par le fait que** le moyen de sécurité (7) est le cylindre hydraulique.

8. La mise basculante de l'outille de travail de la machine agricole selon la revendication 5, **caractérisé par le fait que** le moyen de sécurité (7) est le cylindre pneumatique.

9. La mise basculante de l'outille de travail de la machine agricole selon une des revendications 5 jusqu'à 8, **caractérisé par le fait que** le moyen de sécurité (7) est en même temps fixé de façon basculante dans la griffe (10) disposé au cadre portatif (2) et la griffe (11) disposé au de l'étançon (3) de l'outille de travail (1).
